# EUROPEAN PATENT SPECIFICATION

(11) **EP 1 363 447 B1**
(45) Date of publication and mention of the grant of the patent: **12.02.2014**
(21) Application number: 03291128.1
(22) Date of filing: 14.05.2003
(51) Int. Cl.: H04N 1/00, H04N 5/272, H04N 101/00

(54) **Photographing method and camera device equipped with temporary photographing**
Photografierverfahren und Kameragerät mit vorläufigen Photographieren
Procédé de prise de vues et caméra équipée pour effectuer des prises de vues temporaires

(30) Priority: 14.05.2002 JP 2002138014
(43) Date of publication of application: 19.11.2003
(73) Proprietor: CASIO COMPUTER CO., LTD., Shibuya-ku, Tokyo 151-8543 (JP)
(72) Inventor: Shibutani, Atsushi, Tokorozawa-shi, Saitama-ken (JP)
(74) Representative: Uchida, Kenji

(56) References cited:
- PATENT ABSTRACTS OF JAPAN vol. 2000, no. 19, 5 June 2001 (2001-06-05) -& JP 2001 045352 A (SONY CORP), 16 February 2001 (2001-02-16)

## Description

### BACKGROUND OF THE INVENTION:

### 1. Field of the Invention

The present invention relates to a photographing method and an electronic device with a camera that may be suitable for taking group and/or commemorative photographs.

### 2. Related Background Art

At present, digital still cameras that store photographed images as image data in a variety of recoding media, portable telephone terminals with cameras, and personal digital assistants with cameras (hereafter generally referred to as "digital cameras") are provided with a variety of functions that allow users to take high quality photos with simple operations and without regard to the level of photographing skill of the users. For example, those functions include functions such as automatic focusing control (AF), automatic exposure control (AE), automatic white balance (AWB), and automatic setting of photographing conditions (e.g., shutter speed, aperture, white balance, etc.) that are suitable for each photographing scene. Also, digital cameras are typically equipped with a liquid crystal display that displays a through picture as a viewfinder and displays pictures recorded. In this manner, through taking full advantage of characteristics of digital cameras, functions that cannot be achieved by conventional silver salt cameras tend to be developed.

However, while the usability of digital cameras is improved and their functions are increasingly diversified, the following problems are encountered in view of the fundamental function of cameras, that is, the function of "taking photographs".

When a person takes a photograph of other people, the person herself who is taking the photograph is not normally photographed. Accordingly, for example, when a person wants to take commemorative group photographs (or commemorative photographs or group photographs) of his/her friends, other people, family members at a sightseeing site without a tripod, and that person wants to be in the photographs, he/she may have to hand over the camera to a third person at the site, and ask that third person to perform photographing operations with the camera to take the commemorative group photographs. However, in many cases, since the person who asks to take the photographs and the person who is asked to take the photographs may have different sensitivities and different photographing techniques, pictures with compositions intended by the person who asks to take photographs may not be photographed. In other words, while the usability of digital cameras is improved and their functions are increasingly diversified, the inconvenience of conventional silver salt cameras has not yet been resolved when commemorative photographs are to be taken.

### SUMMARY OF THE INVENTION:

In accordance with a preferred embodiment of the present invention, a photographing method may include a first step of conducting a temporary photographing operation with a photographing unit prior to a main photographing to record a main picture, and temporarily storing a reference picture indicating a composition of a picture being photographed by the photographing unit in a temporary storage unit in response to the temporary photographing operation, and a second step of successively forming a composite picture of the reference picture that is temporarily stored in the temporary storage unit and a through picture, performing the main photographing to photograph a main picture while the composite picture is being displayed on a display unit, and storing image data of the main picture in a picture storage unit different from the temporary storage unit in response to the main photographing.

In accordance with a preferred embodiment of the present invention, a camera device includes a photographing unit, a temporary storage unit that temporarily stores a reference picture indicating a composition of a picture being photographed by the photographing unit in a temporary photographing prior to a main photographing to record a main picture by the photographing unit, a mixing unit that forms a composite picture of the reference picture that is temporarily stored in the temporary storage unit and a through picture successively photographed by the photographing unit, a display unit that displays the composite picture that is formed by the mixing unit in a standby state in the main photographing, and a recording control unit that stores picture data of a main picture taken in the main photographing in a picture storage unit that is different from the temporary storage unit.

In accordance with a preferred embodiment of the present invention, a recording medium that stores a program for having a computer of a camera device equipped with a photographing unit that photographs objects, and a display unit that displays through pictures that are photographed by the photographing unit in a photographing standby state to execute the steps of: temporarily storing a reference picture indicating a composition of a picture being photographed by the photographing unit in a temporary photographing prior to a main photographing to record a main picture, forming a composite picture of the reference picture that is temporarily stored in the temporary storage unit and a through picture successively photographed by the photographing unit, displaying the composite picture that is formed by the mixing unit in a standby state in the main photographing, and storing picture data of a main picture taken in the main photographing in a picture storage unit that is different from the temporary storage unit.

Other features and advantages of the invention will be apparent from the following detailed description, taken in conjunction with the accompanying drawings that illustrate, by way of example, various features of embodiments of the invention.

### BRIEF DESCRIPTION OF THE DRAWINGS:

Fig. 1 is a block diagram of a digital camera that may be commonly applicable to first, second and third embodiments of the present invention.
Fig. 2 is a flow chart indicating operations of pre-short photographing mode in accordance with the first embodiment of the present invention.
Fig. 3A is a view indicating a condition of a through picture that is displayed on a display device immediately before a temporary photographing.
Fig. 3B is a view indicating a condition of a composite picture of a picture taken by the temporary photographing and a through picture, which is displayed on the display device immediately after the temporary photographing has been performed.
Fig. 4A is a view indicating a condition of a composite picture of the picture taken by the temporary photographing and a through picture, which is displayed on the display device in a main photographing.
Fig. 4B is a view indicating a condition of a composite picture the picture taken by the temporary photographing, a through picture and a message, which is displayed on the display device when the shutter button is half-depressed at the time of main photographing.
Fig. 5A shows a view indicating a photographed picture that is recorded in the main photographing.
Fig. 5B shows a view indicating a condition of displaying a reproduced photographed picture (a composite picture of the photographed picture and the message), which is displayed on the display device immediately after the main photographing has been performed.
Fig. 6 is a flow chart indicating operations in a pre-shot photographing mode in accordance with a second embodiment of the present invention.
Fig. 7 is a flow chart indicating operations in a pre-shot photographing mode in accordance with a third embodiment of the present invention.

### DESCRIPTION OF THE PREFERRED EMBODIMENTS:

### (First Embodiment)

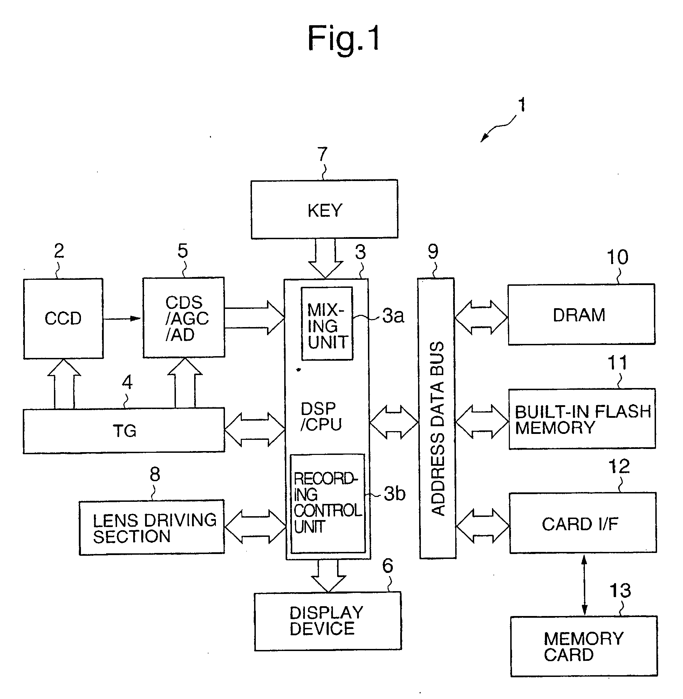

Fig. 1 is a block diagram of an electrical composition of a digital camera 1, which is a camera device in accordance with a first embodiment of the present invention. The digital camera 1 is equipped with ordinary functions such as an auto-focus (AF) function, an automatic exposure control (AE) function, and the like, and includes a charge coupled device (CCD) 2 and a digital signal processor/central processing unit (DSP/CPU) 3, which compose a photographing unit. The CCD 2 photoelectrically converts an optical picture of a subject that is focused through a focus lens and a zoom lens (not shown), and outputs an analog photographic signal according to the optical picture of the subject. The DSP/CPU 3 has a variety of digital signal processing functions including functions to compress and expand picture data in JPEG, and is a single-chip microcomputer that controls various parts of the digital camera 1.

The DSP/CPU 3 is connected to a timing generator (TG) 4 that drives the CCD 2, and the TG is connected to a unit circuit 5 that receives inputs of photographed signal that is outputted from the CCD 2. The unit circuit 5 is composed of a CDS that samples and retains the inputted photographed signal, an automatic gain controller (AGC) which is a gain adjusting amplifier that amplifies the photographed signal, and an A/D converter (AD) that converts the amplified photographed signal into a digital photographed signal. Signals outputted from the CCD 2 are sent as digital signals through the unit circuit 5 to the DSP/CPU 3.

Also, the DSP/CPU 3 is connected to a display device 6, a key input section 7, and a lens driving section 8, and also connected through an address data bus 9 to a dynamic random access memory (DRAM) 10 that is a volatile memory device, a built-in flash memory 11 that is a rewritable non-volatile memory device, and a card interface 12. The card interface 12 may be connected to a memory card (i.e., a card type flash memory) 13 that is a rewritable non-volatile memory device which is detachably mounted in a card slot of the camera main body.

The lens driving section 8 is essentially composed of a stepping motor that drives the focus lens and the zoom lens in their respective axial directions, and a motor driver that drives the focus lens and the zoom lens according to control signals sent from the DSP/CPU 3. The DRAM 10 is a buffer that temporarily stores picture data of a subject that has been photographed by the CCD 2 and digitized when a photographing standby mode is set, and functions as a temporary storage device that is used as a working memory for the DSP/CPU 3. Picture data that is temporarily stored in the DRAM 10 is compressed, and eventually recorded in the memory card 13 (i.e., a picture storage device). The built-in flash memory 11 stores a variety of data that are sued to control various parts of the digital camera and an operation program for the DSP/CPU 3.

The DSP/CPU 3 operates according to the operation program to thereby perform a variety of operations, at the time of photographing, including a position control (AF control) for the focus lens by the driving motor of the lens driving section, a charge storing time (shutter speed) of the CCD 2, and an AE control that adjusts gains by the automatic gain controller (AGC) in the unit circuit 5, and also functions, at the time of operations in a pre-shot photographing mode to be described below, as a mixing unit 3a and a recording control unit 3b in accordance with an embodiment of the present invention.

The display device 6 is a display unit, which includes a color LCD and its driving circuit. The display device 6 may be controlled by a display control unit (not shown) (which may be a part of the operation program or an independent control device) to display a picture of a subject that is photographed by the CCD 2 as a through picture in a photographing standby mode, and to display a recorded picture that is read out from the memory card 13 and expanded in a reproduction mode. The key input section 7 includes a plurality of operation keys such as a shutter button, a power key, a mode selection key, a cross key and the like, and outputs key input signals according to key operations by an operator to the DSP/CPU 3.

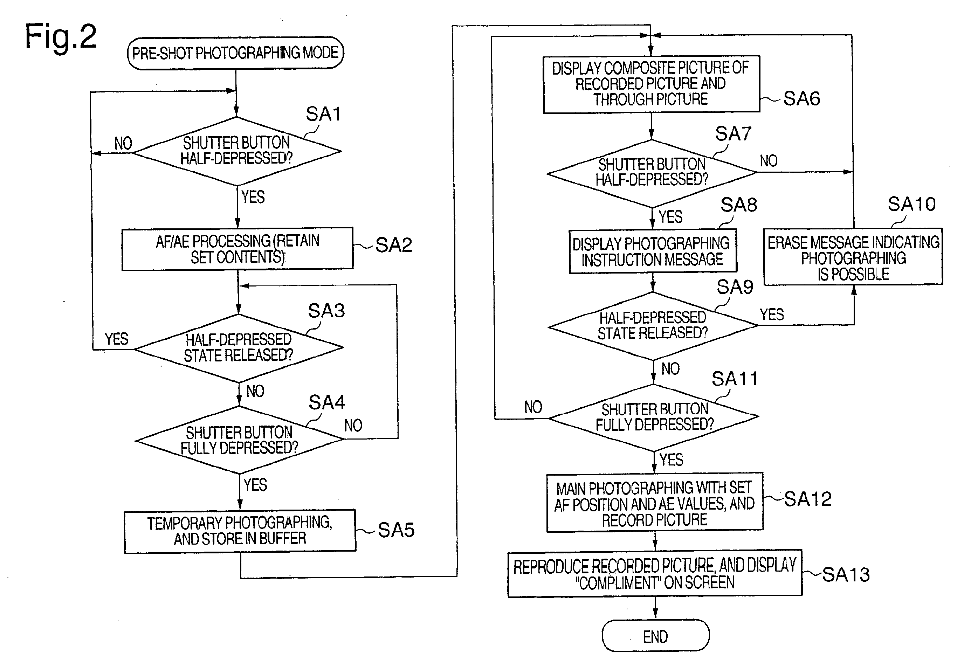

In the digital camera 1 having the structure described above, operations indicated in a flow chart in Fig. 2 take place when a pre-shot photographing mode is selected by the user of the digital camera 1. The operations will be described with reference to the flow chart in Fig. 2. It is assumed in the following description that the user is in any photographing site such as in a sightseeing spot, a theme park, an amusement park or the like with her friend, and wants to photograph both herself and her friend. Photographing steps to be taken by the user in such a situation will be also described.

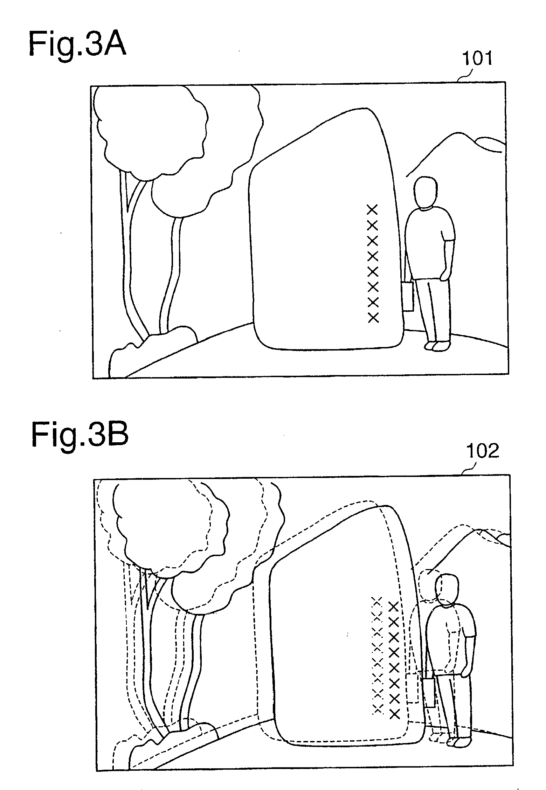

First, the user of the digital camera selects a pre-shot photographing mode by operating the mode selection key. When the pre-shot photographing mode is selected, as indicated in Fig. 2, the digital camera 1 is placed in a photographing standby state like an ordinary photographing standby mode in which an operation of the shutter button is waited for (NO in step SA1). In the photographing standby state, a subject is continuously photographed by the CCD 2, and image data of the photographed subject is inputted in the DRAM 10, and displayed as a through picture on the display device 6 for monitoring the subject. The user who is photographing (i.e., the user of the camera) decides a desired composition of a photograph to be taken while viewing a through picture 101 indicated in Fig. 3A, for example. At this moment, the user may mentally depict the location of herself in a frame of a photograph to be taken to decide the composition, and then depress the shutter button to perform a temporary photographing.

In the mean time, the digital camera 1 makes a determination as to whether or not the shutter button is half-depressed by the user, in other words, the digital camera 1 makes a determination as to whether or not a first shutter operation is performed. When the shutter button is half-depressed, the digital camera 1 performs an AF processing and an AE processing to set various conditions including an appropriate position of the focus lens (AF position) and various control values (AE values) such as a shutter speed, a gain of the gain adjusting amplifier (AGC), and the like, and retains the photographing conditions that have been set. In other words, a so-called AF/AE lock is performed (step SA2). Also, when the shutter button is released from the half-depressed state before the shutter button is fully depressed, in other words, before a second shutter operation is performed (YES in step SA3, or NO in both of step SA3 and SA4), the processing returns to step SA1, and an AF processing and an AE processing are performed again. Then, when the shutter button is fully depressed by the user (YES in step SA4), a temporary photographing is performed, whereby picture data of the subject picture that is being displayed as a through picture (101) at the moment is temporarily stored as is in a specified region of the DRAM 10 as data of a reference picture for picture composition that indicates a composition of the through picture (step SA5).

Then, the mixing unit 3a of the digital camera 1 mixes data of the reference picture recorded in step SA5 and a newly photographed through picture, and displays on the display device 6 a composite picture 102 that mixes the reference picture (a picture indicated by dotted lines) and a through picture (a picture indicated by solid lines) in Fig. 3B (step SA6). In the present embodiment, for example, when the reference picture (which is a through picture taken at the time the shutter button is fully depressed) and a current through picture are mixed and displayed, the display tone of the reference picture may be lowered than that of the current through picture such that the reference picture is displayed semitransparent.

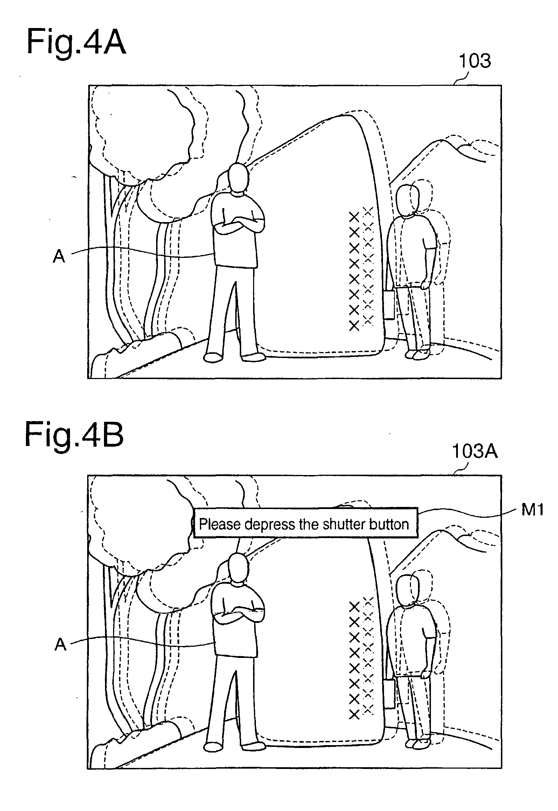

When the user finishes the temporary photographing, the user may give the camera to a third person who may be on the site and asks that person to take a photograph, and the user moves to the location that has been predetermined by her in the temporary photographing. In the mean time, the digital camera 1 is repeating the processing in step SA6 described above until the shutter button is half-depressed again (NO in step SA7); and when the third person who is asked to take a photograph holds the camera, the digital camera 1 is displaying a composite picture 103, for example as shown in Fig. 4A, which mixes the through picture (101) that has been taken at the time of the temporary photographing and a current through picture that shows the individual A (i.e., the user) who has moved to the predetermined location, which is similar to the composite picture shown in Fig. 3B. Then, the third person who is holding the camera, while viewing the composite picture 103, tries to match picture contents (through picture portions) corresponding to the reference picture with picture contents (through picture portions) corresponding to the current through picture, in other words, performs a framing to superpose portions of the two through pictures except a through picture portion of the individual A as mush as possible, and then takes a photograph by depressing the shutter button. The user may explain to the third person about the procedure of taking a photograph with the digital camera 1 in advance when she asks the third person to take a photograph while showing the composite pictures 102 indicated in Fig. 3B and Fig. 4A.

Also, the digital camera 1 performs an OSD (On Screen Display), in other words, displays an image 103A indicating a photographing instruction message M1 such as "Please depress the shutter" for the composite picture 103 shown in Figs. 3B and 4A on a screen of the display device 6 (step SA8), if the shutter button is half-depressed by the third person while the processing in step SA6 is repeated. Then, if the shutter button is not fully depressed and the half-depressed state of the shutter button is released (YES in step SA9), the photographing instruction message M1 is erased (step SA10), and the processing returns to step SA6 in which a new composite picture is displayed on the display device 6.

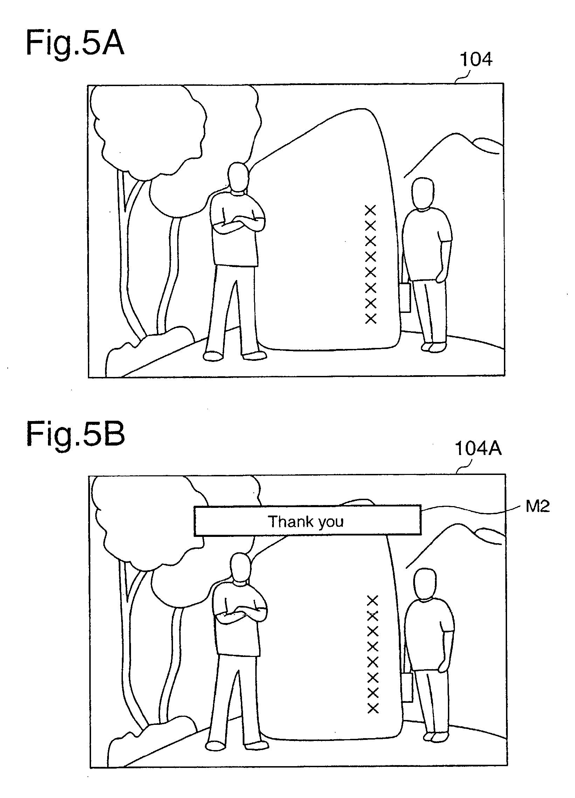

Steps SA6 - SA10 are repeated until the shutter button is fully depressed; and when the shutter button is fully depressed (YES in step SA11), a main photographing takes place with the AF position and AE values (photographing conditions) that have been set and retained in step SA2 in the temporary photographing, such that a photographing picture 104 shown in Fig. 5A is recorded. In other words, a picture of the subject at this moment is taken by the CCD 2, and the picture data of the subject picture is compressed and stored in the memory card 13 (step SA12). Also, at this moment, the data of the reference picture that was temporarily stored in a specified region of the DRAM 10 at the time of temporary photographing in step SA5 is erased by overwriting with the picture data of the subject picture taken in the main photographing. Thereafter, the recorded photographed picture 104 may be immediately reproduced and displayed on the display device 6, and an image 104A indicating a compliment message M2 such as "Thank you" is displayed on the screen, as indicated in Fig. 5B (step SA13), and the operations in the pre-shot photographing mode are completed. It is noted that the reproduction of the photographed picture 104 and the display of the message M2 may be automatically ended after a predetermined time (e.g., several seconds) has passed.

Accordingly, when the user of the digital camera 1 in accordance with the present embodiment asks a third person to take a main photograph of a commemorative group photograph including herself, the user may selects the pre-shot photographing mode, take a temporary photograph with her desired composition, and then has the third person perform the photographing operation to take a main photograph. By doing so, a photograph with a composition that is substantially identical with her desired composition can be taken. In this way, the user can be released from the inconvenience in commemorative group photographing. At the same time, the third person who is asked to perform the main photographing operation does not need to think about a composition in the commemorative group photograph, and therefore the third person can take a photograph with ease, which can alleviate the psychological burden of the user who asks the third person to take a photograph.

Moreover, at the main photographing, when the shutter button is half-depressed, the photographing instruction message M1 is displayed. Accordingly, the third person who is asked to take a photograph can perform the photographing operation without hesitation even when a picture that may be different from an ordinary through picture is displayed, which makes the photographing operation more user-friendly. Also, the AF position and AE values that were set at the temporary photographing are retained (in step SA2), and a photograph is taken (photographing takes place) with the retained AE position and AE values at the time of a main photographing in step SA12. Accordingly, a photograph that has an atmosphere quite similar to the atmosphere (the focus position and exposure state in the present embodiment) that was confirmed in advance at the time of temporary photographing can be taken. In another embodiment, an AF/AE lock may not be performed at the time of temporary photographing, and an AF processing and an AE processing may be performed for the first time at the time of main photographing. In particular, with respect to the AE processing, it may preferably be performed at the time of main photographing. By doing so, there is an advantage in that, for example, a photograph can be taken with an appropriate exposure amount even when a photograph is taken outside during day time, and the lighting condition may suddenly change.

Also, in the embodiment described above, immediately after the main photographing is finished, the recorded photographed picture is immediately reproduced in step SA13, and the compliment message M2 is displayed superposed on the picture on the display screen. However, instead of immediately reproducing the recorded photographed picture, a current through picture may be displayed frozen (in a still photograph) when the shutter button is fully depressed, and the compliment message M1 may be displayed superposed on the displayed through picture.

Also, in the embodiment described above, when the shutter button is half-depressed after the temporary photographing, the photographing instruction message M1 is displayed superposed on the composite picture 103 in step SA8, indicating that a photograph can be taken with a message, such as, "Please depress the shutter button." However, the message can be one that not only tells that a photograph can be taken but also functions as a guidance that tells a photographing procedure, such as, for example, "Please depress the shutter button while superposing the images." In this case, by giving such a message, the third person who is asked to take a photograph can take the photograph with more ease and without feeling a sense of incompatibility.

### (Second Embodiment)

Next, a second embodiment of the present invention will be described. A digital camera 1 in accordance with the second embodiment has a structure similar to that of the embodiment shown in Fig. 1, but is equipped with a pre-shot photographing mode that is different from the first embodiment. The digital camera 1 has a built-in flash memory 11 that stores a control program that makes the digital camera 1 operate in the pre-shot photographing mode of the second embodiment.

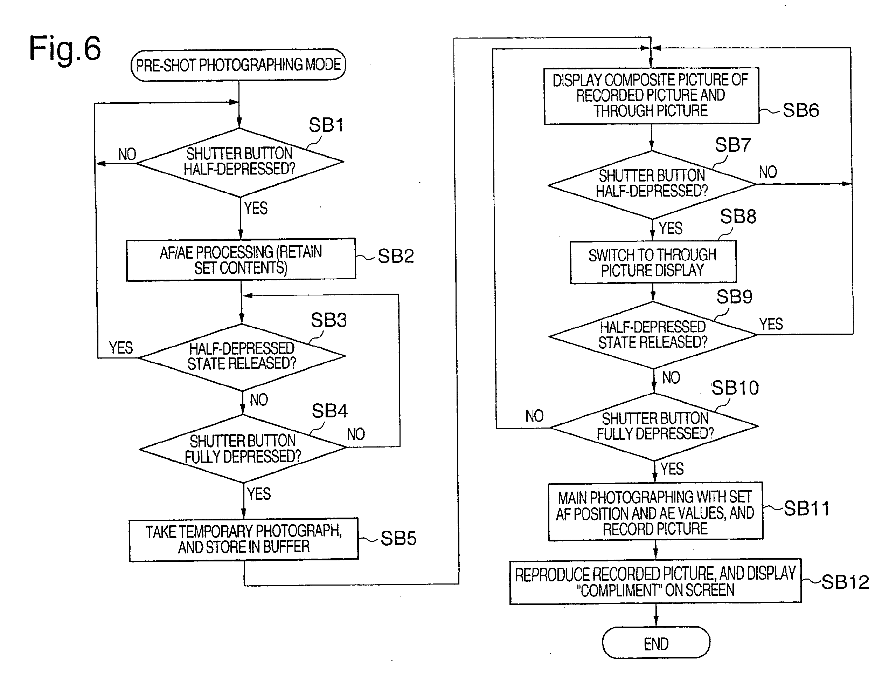

Fig. 6 is a flow chart of operations of the digital camera 1 when the pre-shot photographing mode of the second embodiment is selected. More specifically, after a temporary photographing has been performed by the user, the digital camera 1 executes the same operations as those of the first embodiment (step SB1 - step SB7) until the shutter button is half-depressed. When the shutter button is half-depressed (YES in step SB7), a composite picture 103 (see Fig. 4A) of a reference picture that was recorded at the time of temporary photographing in step SB5 (a through picture at the time of temporary photographing) and a current through picture, which has so far been displayed on the display device 6, is switched to an ordinary, current through picture (step SB8) by a display switching unit (which is not shown, but may be a part of the control program). If the half-depressed state of the shutter button is released without the shutter button being fully depressed thereafter (YES in step SB9), the processing returns to step SB6 and a new composite picture is displayed on the display device 6.

The succeeding operations are the same as the first embodiment; more specifically, steps SB6 - SB9 are repeated until the shutter button is fully depressed, a main photographing is performed, when the shutter button is fully depressed (YES in step SB 10), with the AF position and AE values that have been set at the time of temporary photographing to record a photographed image 104, the reference picture that was temporarily stored at the time of temporary photographing is discarded (step SB11), the recorded picture is immediately reproduced, and a compliment message M2 is displayed on the screen (step SB12), thereby ending the operations in the pre-shot photographing mode.

As described above, in the second embodiment, in the main photographing that takes place after the temporary photographing, a displayed picture on the display device 6 is switched to an ordinary through picture when the shutter button is half-depressed. As a result, the third person who is asked to operate the digital camera 1 to take a photograph can confirm details of the subject with a clear, clean through picture in a state before the shutter button is fully depressed. Accordingly, for example, while confirming facial expressions of the person displayed on the display device 6, a photograph of the person can be taken in a good photographing moment.

In the embodiment described above, when the shutter button is half-depressed after the temporary photographing, a composite picture displayed on the display device 6 is switched to an ordinary through picture, thereby allowing the third person to confirm details of the subject, and at the same time indicating to the third person who is holding the digital camera 1 that she can take a photograph. However, a photographing instruction message M1, which may be similar to the one described above in the first embodiment, may be displayed superposed on the composite picture being displayed before the shutter button is half-depressed, and the composite picture with the superposed message may be switched to an ordinary through picture when the shutter button is half-depressed.

Also, other operations, in other words, operations concerning the AF/AE lock in a temporary photographing, and display contents of a photographed picture and a compliment message M2 to be displayed in step SB 12 immediately after the main photographing is completed can be appropriately modified if necessary, as indicated also in the first embodiment.

### (Third Embodiment)

Next, a third embodiment of the present invention will be described. A digital camera 1 in accordance with the third embodiment has a structure similar to that of the embodiment shown in Fig. 1, but is equipped with a pre-shot photographing mode that is different from the first embodiment or the second embodiment. The digital camera 1 has a built-in flash memory 11 that stores a control program that makes the digital camera 1 operate in the pre-shot photographing mode of the third embodiment.

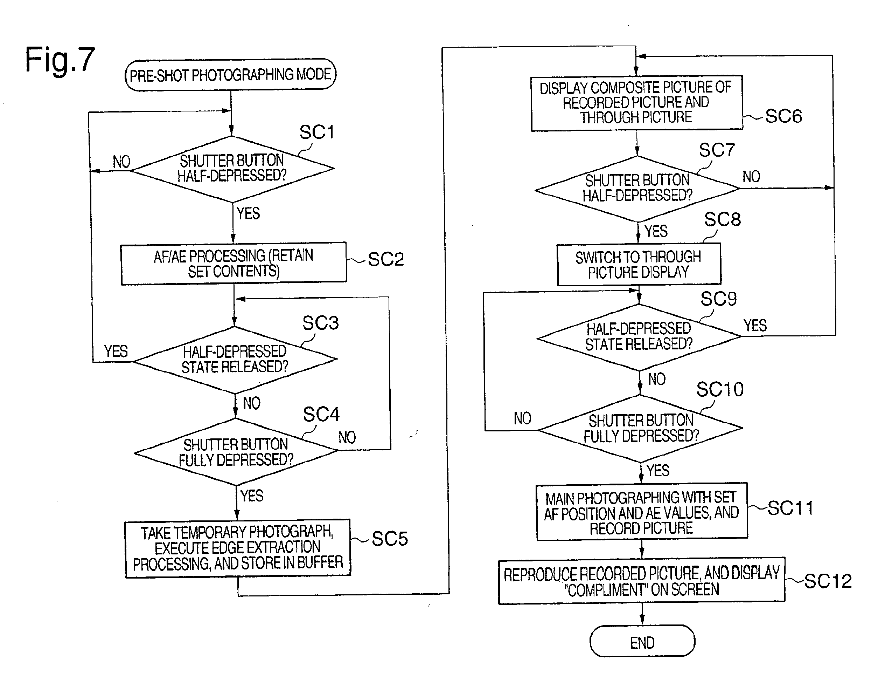

Fig. 7 is a flow chart of operations of the digital camera 1 that take place when the pre-shot photographing mode of the third embodiment is selected. More specifically, when the shutter button is half-depressed after the user selected the pre-shot photographing mode, the digital camera 1 performs an AF processing and an AE processing at the moment when the shutter button is half-depressed (YES in step SC1) and stores set contents of AF position and AE values in a DRAM 10 (step SC2). If the half-depressed state of the shutter button is released (YES in step SC3, or NO in both of step SC3 and SC4) before the shutter button is fully depressed, the processing returns to step SC1 and an AF processing and an AE processing are performed anew. The processings up to this moment are the same as those in the first and second embodiments.

Then, when the shutter button is fully depressed by the user (YES in step SC4), a temporary photographing is performed, an image processing such as an edge (contour) extraction processing is performed (by, for example, an image processing component in the control program) on a picture that is being photographed and displayed as a through picture (101) at this moment to extract only the contours of images in the picture, and data of the processed edge picture is temporarily stored in a predetermined region of the DRAM 10 as data of a reference picture that indicates a composition of the through picture taken at the time of temporary photographing (step SC5). Then, the data of the reference picture recorded and data of a through picture that is newly retrieved are mixed to form a composite picture (not shown), and the composite picture is displayed on the display device 6 (step SC6). Then, operations that are the same as those of step SB7 - SB12 in the second embodiment are performed (step SC7 - SC12), and the operations in the pre-shot photographing mode are completed.

As described above, in the third embodiment, the reference picture that indicates a composition of the through picture at the time of temporary photographing, which is mixed with a current through picture in a standby state of the main photographing and displayed on the display device 6, is processed into an edge picture showing only the contour of photographed images which is obtained at the time of temporary photographing. As a result, this makes it easier for the person who is asked to perform the photographing operations to compare the two pictures. Accordingly, positioning of a through picture with respect to the reference picture, in other words, matching compositions of them become easier.

In the third embodiment, a reference picture that serves as a basis of composition matching is processed into an edge picture, which is different from the first and second embodiments. In another embodiment, for example, a through picture that is photographed at the time of temporary photographing may be subject to a monochrome rendering processing, the processed picture that is a monochrome picture is stored as a reference picture, and a composite picture that mixes the monochrome picture and a current through picture may be displayed on the display device 6 in a standby state of the main photographing.

Also, in the above description, an edge picture as a reference picture is generated and temporarily stored in a predetermined region of the DRAM 10 at the time of temporary photographing. However, in a different embodiment, a through picture photographed at the time of temporary photographing may be temporarily stored as is (which is the same as the first embodiment) and, in a standby state of the main photographing, an edge extraction processing may be performed on the reference picture temporarily stored, and then the processed edge picture may be mixed with a current through picture.

Further, in the present embodiment, a photographing instruction message M1 similar to the one described above in the first embodiment may be displayed superposed on a composite picture that is displayed before the shutter button is half-depressed. Also, operations concerning the AF/AE lock in a temporary photographing, and display contents of a photographed picture and a compliment message M2 that may be displayed immediately after the main photographing is completed in step SC12 may be appropriately changed if necessary, as indicated in the first embodiment. Also, in the third embodiment, a composite picture displayed on the display device 6 is switched to an ordinary through picture when the shutter button is half-depressed at the time of main photographing, like the second embodiment. However, a photographing instruction message M1 may be displayed superposed on a composite picture being displayed when the shutter button is half-depressed, like the first embodiment.

Also, in the embodiments described above, the present invention is applied mainly to digital cameras that record photographed pictures as picture data in recording media. However, the present invention may also be applicable to silver salt cameras that use conventional photographing films, when the cameras are quipped with image sensors such as CCDs that photograph subjects, and liquid crystal display devices that display through pictures of pictures photographed by the CCDs. Such silver salt cameras can provide substantially the same effects obtained by the embodiments described above.

While the description above refers to particular embodiments of the present invention, it will be understood that many modifications may be made without departing from the scope of the present invention, as defined in the appended claims.

## Claims

1. A photographing method comprising:
a first step of conducting a temporary photographing operation with a photographing unit (2, 3) prior to a main photographing operation, and temporarily storing (SA5) a reference picture indicating a composition of a picture (101) being photographed by the photographing unit in a temporary storage unit (10) in response to the temporary photographing operation; and
a second step of successively:
forming a composite picture (103) of the reference picture that is temporarily stored in the temporary storage unit and a current through picture,
displaying (SA6) on a display unit (6) the composite picture that mixes the reference picture and the current through picture,
performing the main photographing operation to photograph a main picture (104) while the composite picture (103) is being displayed on the display unit, by performing a framing to match picture contents corresponding to the reference picture and picture contents corresponding to the current through picture, such that the composition of the main picture (104) photographed by the photograph unit is substantially identical to that of the reference picture, and
storing (SA12) image data of the main picture (104) in a picture storage unit (13) different from the temporary storage unit (10) in response to the main photographing operation, without mixing such main picture with the reference picture.

2. A photographing method according to claim 1, wherein, in the first step, the picture (101) photographed by the photographing unit (2, 3) is temporarily stored as the reference picture; and in the second step, a specified image processing is performed on the reference picture that is temporarily stored, and the reference picture processed is successively mixed with a current through picture.

3. A photographing method according to claim 1, wherein, in the first step, an image processing is performed on the picture photographed by the photographing unit and is temporarily stored as the reference picture.

4. A photographing method according to claim 2 or 3, wherein the image processing is an edge extraction processing to extract contours of images in the picture.

5. A photographing method according to claim 2 or 3, wherein the image processing is a monochrome rendering processing to convert the picture into a monochrome picture.

6. A photographing method according to claim 1, wherein, in the second step, a message (M1) indicating that the main picture can be photographed is displayed on the display unit (6) in response to a first shutter operation in the main photographing operation, and the main picture is photographed in response to a second shutter operation in the main photographing operation that follows the first shutter operation.

7. A photographing method according to claim 1, wherein, in the second step, the composite picture being displayed on the display unit is switched (SB8) to a through picture of the subject in response to a first shutter operation, and the main picture is photographed in response to a second shutter operation in the main photographing operation that follows the first shutter operation.

8. A photographing method according to claim 1, wherein, in the first step, a predetermined photographing condition is set and stored; and in the second step, the main picture is photographed with the photographing condition that is set and stored in the first step.

9. A photographing method according to claim 1, wherein, in the second step, the main picture of the subject is stored in the picture storage unit different from the temporary storage unit through the temporary storage unit in response to the main photographing operation.

10. A photographing method according to claim 9, wherein, in the second step, when the main picture of the subject is stored in the picture storage unit different from the temporary storage unit through the temporary storage unit, the main picture of the subject is written over the reference picture that is stored in the temporary storage unit.

11. A photographing method according to claim 1, wherein the temporary storage unit is a volatile memory and the picture storage unit is a rewritable non-volatile memory.

12. A photographing method according to claim 11, wherein the volatile memory is a dynamic random access memory and the rewritable non-volatile memory is a flash memory.

13. A camera device (1) comprising:
a photographing unit (2, 3);
a display unit (6) for displaying data;
a temporary storage unit (10) that temporarily stores a reference picture indicating a composition of a picture (101) being photographed by the photographing unit in a temporary photographing operation prior to a main photographing operation;
a mixing unit (3a) that forms a composite picture of the reference picture that is temporarily stored in the temporary storage unit and a current through picture photographed by the photographing unit prior to the main photographing operation, and that displays the formed composite picture on the display unit in a standby state in the main photographing operation; and
a recording control unit (3b) that stores picture data of a main picture taken in the main photographing operation with a composition substantially identical to that of the reference picture in a picture storage unit (13) that is different from the temporary storage unit (10), without mixing such main picture with the reference picture.

14. A camera device according to claim 13, further comprising an image processing unit, wherein, in the temporary photographing operation, the picture photographed by the photographing unit is temporarily stored in the temporary storage unit as is as the reference picture; and in the main photographing operation, the image processing unit performs an image processing on the reference picture that is temporarily stored in the temporary storage unit, and the mixing unit successively mixes the reference picture that is processed with a current through picture.

15. A camera device according to claim 13, further comprising an image processing unit, wherein, in the temporary photographing operation, the image processing unit performs an image processing on the picture photographed by the photographing unit and temporarily stored as the reference picture in the temporary storage unit.

16. A camera device according to claim 14 or 15, wherein the image processing is an edge extraction processing to extract contours of images in the picture.

17. A camera device according to claim 14 or 15, wherein the image processing is a monochrome rendering processing to convert the picture into a monochrome picture.

18. A camera device according to claim 13, further comprising a display control unit, wherein the display control unit makes the display unit display a message indicating that the main picture can be photographed on the display unit in response to a first shutter operation in the main photographing operation, and the main picture is photographed in response to a second shutter operation in the main photographing operation that follows the first shutter operation.

19. A camera device according to claim 13, further comprising a display switching unit, wherein the display switching unit switches the composite picture being displayed on the display unit to a current through picture of the subject in response to a first shutter operation, and the main picture is photographed in response to a second shutter operation in the main photographing operation that follows the first shutter operation.

20. A camera device according to claim 13, wherein the temporary storage unit includes a predetermined storage region that stores a photographing condition that is set and stored in the temporary photographing operation; and the main picture is photographed with the photographing condition that is set and stored in the temporary photographing operation.

21. A camera device according to claim 13, wherein the storage control unit is responsive to the main photographing operation to store the main picture of the subject in the picture storage unit different from the temporary storage unit through the temporary storage unit.

22. A camera device according to claim 13, wherein the temporary storage unit is a volatile memory, and the picture storage unit is a rewritable non-volatile memory.

23. A camera device according to claim 22, wherein the volatile memory is a dynamic random access memory, and the rewritable non-volatile memory is a flash memory.

24. A recording medium that stores a program for making a computer of a camera device (1), that is equipped with a photographing unit (2, 3) to photograph subjects, and a display unit (6) that displays as a through picture a picture photographed by the photographing unit in a photographing standby state, execute the processings of:
temporarily storing (SA5) a reference picture indicating a composition of a picture (101) being photographed by the photographing unit in a temporary photographing operation prior to a main photographing operation;
forming a composite picture (103) of the reference picture that is temporarily stored in the temporary storage unit and a current through picture photographed by the photographing unit prior to the main photographing operation,;
displaying (SA6) the composite picture on the display unit (6) in a standby state in the main photographing operation; and
storing (SA12) picture data of a main picture taken in the main photographing operation with a composition substantially identical to that of the reference picture in a picture storage unit (13) that is different from the temporary storage unit (10), without mixing such main picture with the reference picture.

## Patentansprüche

1. Fotografierverfahren, das umfasst:
einen ersten Schritt, beinhaltend das Ausführen eines temporären Fotografiervorgangs mit einer Fotografiereinheit (2, 3) vor einem Haupt-Fotografiervorgang und das temporäre Speichern (SA5) eines Referenzbildes, das eine Zusammensetzung eines Bildes (101) anzeigt, das von der Fotografiereinheit fotografiert wird, in einer temporären Speichereinheit (10) in Reaktion auf den temporären Fotografiervorgang; und
einen zweiten Schritt, beinhaltend das anschließende:
Bilden eines zusammengesetzten Bildes (103) aus dem Referenzbild, das temporär in der temporären Speichereinheit gespeichert ist und einem aktuellen Durchgangsbild,
Anzeigen (SA6) des zusammengesetzten Bildes, welches das Referenzbild und das aktuelle Durchgangsbild mischt, auf einer Anzeigeeinheit (6),
Durchführen des Hauptfotografiervorgangs zum Fotografieren eines Hauptbildes (104), während das zusammengesetzte Bild (103) auf der Anzeigeeinheit angezeigt wird, durch Durchführen einer Bildausschnittwahl (Framing) zum Abgleichen von Bildinhalten, die dem Referenzbild entsprechen und Bildinhalten, die dem aktuellen Durchgangsbild entsprechen, so dass die Zusammensetzung des von der Fotografiereinheit fotografierten Hauptbildes (104) im Wesentlichen mit der des Referenzbildes identisch ist, und
Speichern (SA12) der Bilddaten des Hauptbildes (104) in einer Bildspeichereinheit (13), die sich von der temporären Speichereinheit (10) unterscheidet, in Reaktion auf den Hauptfotografiervorgang, ohne dieses Hauptbild mit dem Referenzbild zu mischen.

2. Fotografierverfahren nach Anspruch 1, wobei in dem ersten Schritt das von der Fotografiereinheit (2, 3) fotografierte Bild (101) temporär als das Referenzbild gespeichert wird; und in dem zweiten Schritt eine spezielle Bildverarbeitung an dem temporär gespeicherten Referenzbild durchgeführt wird und das verarbeitete Referenzbild anschließend mit einem aktuellen Durchgangsbild gemischt wird.

3. Fotografierverfahren nach Anspruch 1, wobei in dem ersten Schritt eine Bildverarbeitung an dem von der Fotografiereinheit fotografierten Bild durchgeführt wird und dieses dann temporär als das Referenzbild gespeichert wird.

4. Fotografierverfahren nach Anspruch 2 oder 3, wobei die Bildverarbeitung eine Kantenextraktionsverarbeitung ist, um die Konturen der Abbildungen auf dem Bild zu extrahieren.

5. Fotografierverfahren nach Anspruch 2 oder 3, wobei die Bildverarbeitung eine Monochrom-Rendering-Verarbeitung ist, um das Bild in ein monochromes Bild zu konvertieren.

6. Fotografierverfahren nach Anspruch 1, wobei in dem zweiten Schritt eine Nachricht (M1), dass das Hauptbild fotografiert werden kann, in Reaktion auf einen ersten Kameraverschlussvorgang in dem Hauptfotografiervorgang auf der Anzeigeeinheit (6) angezeigt wird und das Hauptbild in Reaktion auf einen zweiten Kameraverschlussvorgang in dem Hauptfotografiervorgang fotografiert wird, der auf den ersten Kameraverschlussvorgang folgt.

7. Fotografierverfahren nach Anspruch 1, wobei in dem zweiten Schritt das auf der Anzeigeeinheit angezeigte zusammengesetzte Bild in Reaktion auf einen ersten Kameraverschlussvorgang auf ein Durchgangsbild des Motivs umgeschaltet wird (SB8) und das Hauptbild in Reaktion auf einen zweiten Kameraverschlussvorgang in dem Hauptfotografiervorgang, der auf den ersten Kameraverschlussvorgang folgt, fotografiert wird.

8. Fotografierverfahren nach Anspruch 1, wobei in dem ersten Schritt eine vorgegebene Fotografierbedingung festgelegt und gespeichert wird und in dem zweiten Schritt das Hauptbild mit der in dem ersten Schritt festgelegten und gespeicherten Fotografierbedingung fotografiert wird.

9. Fotografierverfahren nach Anspruch 1, wobei in dem zweiten Schritt in Reaktion auf den Hauptfotografiervorgang das Hauptbild des Motivs durch die temporäre Speichereinheit in der Bildspeichereinheit gespeichert wird, die sich von der temporären Speichereinheit unterscheidet.

10. Fotografierverfahren nach Anspruch 9, wobei in dem zweiten Schritt, wenn das Hauptbild des Motivs durch die temporäre Speichereinheit in der Bildspeichereinheit gespeichert wird, die sich von der temporären Speichereinheit unterscheidet, das Hauptbild des Motivs über das in der temporären Speichereinheit gespeicherte Referenzbild geschrieben wird.

11. Fotografierverfahren nach Anspruch 1, wobei die temporäre Speichereinheit ein flüchtiger Speicher ist und die Bildspeichereinheit ein wiederbeschreibbarer nicht flüchtiger Speicher ist.

12. Fotografierverfahren nach Anspruch 11, wobei der flüchtige Speicher ein Dynamic Random Access Memory (DRAM) ist und der wiederbeschreibbare nicht flüchtige Speicher ein Flash-Speicher ist.

13. Kameragerät (1), das umfasst:
eine Fotografiereinheit (2, 3);
eine Anzeigeeinheit (6) zum Anzeigen von Daten;
eine temporäre Speichereinheit (10), die temporär ein Referenzbild speichert, das eine Zusammensetzung eines Bildes (101) zeigt, das von der Fotografiereinheit in einem temporären Fotografiervorgang vor einem Hauptfotografiervorgang fotografiert wird;
eine Mischeinheit (3a), die ein zusammengesetztes Bild aus dem temporär in der temporären Speichereinheit gespeicherten Bild und einem aktuellen Durchgangsbild bildet, das von der Fotografiereinheit vor dem Hauptfotografiervorgang fotografiert wird, und die das gebildete zusammengesetzte Bild in dem Hauptfotografiervorgang in einem Standby-Zustand auf der Anzeigeeinheit anzeigt; und
eine Aufzeichnungssteuerungseinheit (3b), die Bilddaten des in dem Hauptfotografiervorgang aufgenommenen Bildes mit einer Zusammensetzung, die im Wesentlichen identisch mit der des Referenzbildes ist, in einer Bildspeichereinheit (13) speichert, die sich von der temporären Speichereinheit (10) unterscheidet, ohne dabei dieses Hauptbild mit dem Referenzbild zu mischen.

14. Kameragerät nach Anspruch 13, des Weiteren umfassend eine Bildverarbeitungs-einheit, wobei in dem temporären Fotografiervorgang das von der Fotografiereinheit fotografierte Bild so wie es ist als das Referenzbild temporär in der temporären Speichereinheit gespeichert wird; und in dem Hauptfotografiervorgang die Bildverarbeitungseinheit eine Bildverarbeitung an dem temporär in der temporären Speichereinheit gespeicherten Referenzbild durchführt, und die Mischeinheit anschließend das verarbeitete Referenzbild mit einem aktuellen Durchgangsbild mischt.

15. Kameragerät nach Anspruch 13, des Weiteren umfassend eine Bildverarbeitungseinheit, wobei die Bildverarbeitungseinheit in dem temporären Fotografiervorgang eine Bildverarbeitung an dem von der Fotografiereinheit fotografierten und temporär als das Referenzbild in der temporären Speichereinheit gespeicherten Bild durchführt.

16. Kameragerät nach Anspruch 14 oder 15, wobei die Bildverarbeitung eine Kantenextraktionsverarbeitung ist, um die Konturen der Abbildungen auf dem Bild zu extrahieren.

17. Kameragerät nach Anspruch 14 oder 15, wobei die Bildverarbeitung eine Monochrom-Rendering-Verarbeitung ist, um das Bild in ein monochromes Bild zu konvertieren.

18. Kameragerät nach Anspruch 13, des Weiteren umfassend eine Anzeigensteuerungseinheit, wobei die Anzeigensteuerungseinheit die Anzeigeeinheit dazu veranlasst, eine Nachricht, dass das Hauptbild fotografiert werden kann, in Reaktion auf einen ersten Kameraverschlussvorgang in dem Hauptfotografiervorgang auf der Anzeigeeinheit anzuzeigen und das Hauptbild in Reaktion auf einen zweiten Kameraverschlussvorgang in dem Hauptfotografiervorgang fotografiert wird, der auf den ersten Kameraverschlussvorgang folgt.

19. Kameragerät nach Anspruch 13, des Weiteren umfassend eine Anzeige-Umschalteinheit, wobei die Anzeige-Umschalteinheit das auf der Anzeigeeinheit angezeigte zusammengesetzte Bild in Reaktion auf einen ersten Kameraverschlussvorgang auf ein Durchgangsbild des Motivs umschaltet und das Hauptbild in Reaktion auf einen zweiten Kameraverschlussvorgang in dem Hauptfotografiervorgang, der auf den ersten Kameraverschlussvorgang folgt, fotografiert wird.

20. Kameragerät nach Anspruch 13, wobei die temporäre Speichereinheit einen vorgegebenen Speicherbereich aufweist, der eine Fotografierbedingung speichert, die in dem temporären Fotografiervorgang festgelegt und gespeichert wird; und das Hauptbild mit der Fotografierbedingung fotografiert wird, die in dem temporären Fotografiervorgang festgelegt und gespeichert wird.

21. Kameragerät nach Anspruch 13, wobei die Speichersteuerungseinheit auf den Hauptfotografiervorgang reagiert und das Hauptbild des Motivs durch die temporäre Speichereinheit in der Bildspeichereinheit speichert, die sich von der temporären Speichereinheit unterscheidet.

22. Kameragerät nach Anspruch 13, wobei die temporäre Speichereinheit ein flüchtiger Speicher ist und die Bildspeichereinheit ein wiederbeschreibbarer nicht flüchtiger Speicher ist.

23. Kameragerät nach Anspruch 22, wobei der flüchtige Speicher ein Dynamic Random Access Memory (DRAM) ist und der wiederbeschreibbare nicht flüchtige Speicher ein Flash-Speicher ist.

24. Aufzeichnungsmedium, das ein Programm speichert, um einen Computer eines Kamerageräts (1), das mit einer Fotografiereinheit (2, 3) zum Fotografieren von Motiven und einer Anzeigeeinheit (6) ausgestattet ist, die ein Durchgangsbild eines von der Fotografiereinheit fotografierten Bildes in einem Fotografier-Standby-Zustand anzeigt, zur Ausführung folgender Verarbeitungsschritte zu veranlassen:
temporäres Speichern (SA5) eines Referenzbildes, das eine Zusammensetzung eines Bildes (101) zeigt, das von der Fotografiereinheit in einem temporären Fotografiervorgang vor einem Hauptfotografiervorgang fotografiert wird;
Bilden eines zusammengesetzten Bildes (103) aus dem Referenzbild, das temporär in der temporären Speichereinheit gespeichert ist und einem aktuellen Durchgangsbild, das von der Fotografiereinheit vor dem Hauptfotografiervorgang fotografiert wird;
Anzeigen (SA6) des zusammengesetzten Bildes in einem Standby-Zustand auf der Anzeigeeinheit (6) in dem Hauptfotografiervorgang; und
Speichern (SA12) von Bilddaten eines in dem Hauptfotografiervorgang aufgenommenen Bildes mit einer Zusammensetzung, die im Wesentlichen identisch mit der des Referenzbildes ist, in einer Bildspeichereinheit (13), die sich von der temporären Speichereinheit (10) unterscheidet, ohne dabei dieses Hauptbild mit dem Referenzbild zu mischen.

## Revendications

1. Procédé de photographie comprenant :
une première étape destinée à conduire une opération de photographie provisoire avec une unité de photographie (2, 3) avant une opération de photographie principale, et à mémoriser provisoirement (SA5) une image de référence indiquant une composition d'une image (101) photographiée par l'unité de photographie dans une unité de mémorisation provisoire (10) en réponse à une opération de photographie provisoire ; et
une seconde étape consistant successivement à :
former une image composite (103) de l'image de référence qui est mémorisée provisoirement dans l'unité de mémorisation provisoire et d'une image présente,
afficher (SA6) sur une unité d'affichage (6) l'image composite qui est un mélange de l'image de référence et de l'image présente,
exécuter une opération de photographie principale afin de photographier une image principale (104) alors que l'image composite (103) est affichée sur l'unité d'affichage, en exécutant un cadrage afin de faire correspondre le contenu d'image correspondant à l'image de référence et le contenu d'image correspondant à l'image présente, de telle sorte que la composition de l'image principale (104) photographiée par l'unité de photographie est sensiblement identique à celle de l'image de référence, et
mémoriser (SA12) les données d'image de l'image principale (104) dans une unité de mémorisation d'image (13) différente de l'unité de mémorisation provisoire (10) en réponse à l'opération de photographie principale, sans mélanger une telle image principale avec l'image de référence.

2. Procédé de photographie selon la revendication 1, dans lequel, dans la première étape, l'image (101) photographiée par l'unité de photographie (2, 3) est mémorisée provisoirement en tant qu'image de référence ; et dans la seconde étape, un traitement d'image spécifié est mis en oeuvre sur l'image de référence qui est mémorisée provisoirement, et l'image de référence traitée est mélangée successivement à une image présente.

3. Procédé de photographie selon la revendication 1, dans lequel, dans la première étape, un traitement d'image est mis en oeuvre sur l'image photographiée par l'unité de photographie et le résultat mémorisé provisoirement en tant qu'image de référence.

4. Procédé de photographie selon la revendication 2 ou 3, dans lequel le traitement d'image est un traitement d'extraction de bord qui extrait des contours d'images sur l'image.

5. Procédé de photographie selon la revendication 2 ou 3, dans lequel le traitement d'image est un traitement de rendu monochrome destiné à convertir l'image en une image monochrome.

6. Procédé de photographie selon la revendication 1, dans lequel, dans la seconde étape, un message (M1) indiquant que l'image principale peut être photographiée est affiché sur l'unité d'affichage (6) en réponse à une première activation d'obturateur au cours de l'opération de photographie principale, et l'image principale est photographiée en réponse à une seconde activation d'obturateur au cours de l'opération de photographie principale qui suit la première activation d'obturateur.

7. Procédé de photographie selon la revendication 1, dans lequel, dans la seconde étape, l'image composite affichée sur l'unité d'affichage est échangée (SB8) avec une image présente du sujet en réponse à une première activation d'obturateur, et l'image principale est photographiée en réponse à une seconde activation d'obturateur au cours de l'opération de photographie principale qui suit la première activation d'obturateur.

8. Procédé de photographie selon la revendication 1, dans lequel, dans la première étape, une condition de photographie prédéterminé est définie et mémorisée ; et dans la seconde étape, l'image principale est photographiée avec la condition de photographie qui a été définie et mémorisée au cours de la première étape.

9. Procédé de photographie selon la revendication 1, dans lequel, dans la seconde étape, l'image principale du sujet est mémorisée dans l'unité de mémorisation d'image différente de l'unité de mémorisation provisoire par l'intermédiaire de l'unité de mémorisation provisoire en réponse à l'opération de photographie principale.

10. Procédé de photographie selon la revendication 9, dans lequel, dans la seconde étape, lorsque l'image principale du sujet est mémorisée dans l'unité de mémorisation d'image différente de l'unité de mémorisation provisoire par l'intermédiaire de l'unité de mémorisation provisoire, l'image principale du sujet est écrite par dessus l'image de référence qui est mémorisée dans l'unité de mémorisation provisoire.

11. Procédé de photographie selon la revendication 1, dans lequel l'unité de mémorisation provisoire est une mémoire volatile et l'unité de mémorisation d'image est une mémoire non volatile réinscriptible.

12. Procédé de photographie selon la revendication 11, dans lequel la mémoire volatile est une mémoire à accès aléatoire dynamique et la mémoire non volatile réinscriptible est une mémoire instantanée.

13. Dispositif formant appareil photo (1) comprenant : une unité de photographie (2, 3) ;
une unité d'affichage (6) destinée à afficher des données ;
une unité de mémorisation provisoire (10) qui mémorise provisoirement une image de référence indiquant une composition d'une image (101) photographiée par l'unité de photographie au cours d'une opération de photographie provisoire avant l'opération de photographie principale ;
une unité de mélange (3a) qui forme une image composite de l'image de référence qui est mémorisée provisoirement dans l'unité de mémorisation provisoire et une image présente photographiée par l'unité de photographie avant l'opération de photographie principale, et qui affiche l'image composite formée sur l'unité d'affichage dans un état d'attente au cours de l'opération de photographie principale ; et
une unité de commande d'enregistrement (3b) qui mémorise les données d'image d'une image principale prise au cours de l'opération de photographie principale avec une composition sensiblement identique à celle de l'image de référence dans une unité de mémorisation d'image (13) qui est différente de l'unité de mémorisation provisoire (10), sans mélanger une telle image principale avec l'image de référence.

14. Dispositif formant appareil photo selon la revendication 13, comprenant, en outre, une unité de traitement d'image, dans lequel, au cours de l'opération de photographie provisoire, l'image photographiée par l'unité de photographie est mémorisée provisoirement dans l'unité de mémorisation provisoire en tant qu'image de référence ; et au cours de l'opération de photographie principale, l'unité de traitement d'image met en oeuvre un traitement d'image sur l'image de référence qui est mémorisée provisoirement dans l'unité de mémorisation provisoire, et l'unité de mélange réalise successivement le mélange de l'image de référence qui est traitée avec une image présente.

15. Dispositif formant appareil photo selon la revendication 13, comprenant, en outre, une unité de traitement d'image, dans lequel au cours de l'opération de photographie provisoire, l'unité de traitement d'image met en oeuvre un traitement d'image sur l'image photographiée par l'unité de photographie et mémorisée provisoirement en tant qu'image de référence dans l'unité de mémorisation provisoire.

16. Dispositif formant appareil photo selon la revendication 14 ou 15, dans lequel le traitement d'image est un traitement d'extraction de bord qui extrait les contours d'images sur l'image.

17. Dispositif formant appareil photo selon la revendication 14 ou 15, dans lequel le traitement d'image est un traitement de rendu monochrome destiné à convertir l'image en une image monochrome.

18. Dispositif formant appareil photo selon la revendication 13, comprenant, en outre, une unité de commande d'affichage, dans lequel l'unité de commande d'affichage conduit l'unité d'affichage à afficher un message indiquant que l'image principale peut être photographiée sur l'unité d'affichage en réponse à une première activation d'obturateur au cours de l'opération de photographie principale, et l'image principale est photographiée en réponse à une seconde activation d'obturateur au cours de l'opération de photographie principale qui suit la première activation d'obturateur.

19. Dispositif formant appareil photo selon la revendication 13, comprenant, en outre, une unité d'échange d'affichage, dans lequel l'unité d'échange d'affichage échange l'image composite affichée sur l'unité d'affichage avec une image présente du sujet en réponse à une première activation d'obturateur, et l'image principale est photographiée en réponse à une seconde activation d'obturateur au cours de l'opération de photographie principale qui suit la première activation d'obturateur.

20. Dispositif formant appareil photo selon la revendication 13, dans lequel l'unité de mémorisation provisoire comporte une zone de mémorisation prédéterminée qui mémorise une condition de photographie qui est définie et mémorisée au cours de l'opération de photographie provisoire ; et l'image principale est photographiée avec la condition de photographie qui est définie et mémorisée au cours de l'opération de photographie provisoire.

21. Dispositif formant appareil photo selon la revendication 13, dans lequel l'unité de commande de mémorisation réagit à l'opération de photographie principale afin de mémoriser l'image principale du sujet dans l'unité de mémorisation d'image différente de l'unité de mémorisation provisoire par l'intermédiaire de l'unité de mémorisation provisoire.

22. Dispositif formant appareil photo selon la revendication 13, dans lequel l'unité de mémorisation provisoire est une mémoire volatile, et l'unité de mémorisation d'image est une mémoire non volatile réinscriptible.

23. Dispositif formant appareil photo selon la revendication 22, dans lequel la mémoire volatile est une mémoire à accès aléatoire dynamique, et la mémoire non volatile réinscriptible est une mémoire instantanée.

24. Support d'enregistrement qui mémorise un programme destiné à amener un ordinateur d'un dispositif formant appareil photo (1), qui est équipé d'une unité de photographie (2, 3) destinée à photographier des sujets, et d'une unité d'affichage (6) qui affiche sous forme d'une image présente, une image photographiée par l'unité de photographie dans un état d'attente de photographie, à exécuter les traitements consistant à :
mémoriser provisoirement (SA5) une image de référence indiquant une composition d'une image (101) photographiée par l'unité de photographie au cours d'une opération de photographie provisoire avant une opération de photographie principale ;
former une image composite (103) de l'image de référence qui est mémorisée provisoirement dans l'unité de mémorisation provisoire et d'une image présente photographiée par l'unité de photographie avant l'opération de photographie principale ;
afficher (SA6) l'image composite sur l'unité d'affichage (6) dans un état de d'attente au cours de l'opération de photographie principale ; et
mémoriser (SA12) des données d'image d'une image principale prise au cours de l'opération de photographie principale avec une composition sensiblement identique à celle de l'image de référence dans une unité de mémorisation d'image (13) qui est différente de l'unité de mémorisation provisoire (10), sans mélanger une telle image principale avec l'image de référence.
